(19) Europäisches Patentamt
European Patent Office
Office européen des brevets

(11) EP 4 306 576 A1

(12) EUROPEAN PATENT APPLICATION

(43) Date of publication:
**17.01.2024 Bulletin 2024/03**

(21) Application number: **22184640.5**

(22) Date of filing: **13.07.2022**

(51) International Patent Classification (IPC):
***C08J 9/00*** *(2006.01)* ***A43B 13/00*** *(2006.01)*
***C08J 9/06*** *(2006.01)* ***C08J 9/10*** *(2006.01)*
***C08L 23/08*** *(2006.01)*

(52) Cooperative Patent Classification (CPC):
(C-Sets available)
**C08J 9/0061; A43B 13/04; C08J 9/06; C08J 9/103; C08L 23/0853; C08L 23/0869;** C08J 2201/026; C08J 2323/08; C08J 2423/08 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
- **EK, Carl-Gustaf**
**42658 Västra Frölunda (SE)**
- **LIU, Yi**
**4021 Linz (AT)**
- **PASTORINI, Mirela Tury**
**4021 Linz (AT)**
- **ROMAIN, Jean-Philippe**
**8005 Zürich (CH)**

(74) Representative: **Kador & Partner Part mbB**
**Corneliusstraße 15**
**80469 München (DE)**

# (54) CROSSLINKED HPPE COPOLYMER FOR FOAM APPLICATIONS

(57) The present invention relates to a foam composition comprising a) a resin composition comprising a1) 25 to 100 phr of a copolymer of ethylene and alkyl (meth)acrylate, wherein the alkyl (meth)acrylate is selected from the group consisting of methyl (meth)acrylate and butyl (meth)acrylate; and a2) 0 to 75 phr of a copolymer of ethylene and vinyl acetate; and 1 to 25 phr of foam composition additives. The present invention also relates to a foam material obtainable from the foam composition, and a method of making an article comprising the foam material, as well as to a footwear article comprising the foam material.

EP 4 306 576 A1

(52) Cooperative Patent Classification (CPC): (Cont.)

C-Sets
**C08L 23/0853, C08L 23/0869;**
**C08L 23/0853, C08L 23/0869, C08K 5/235,**
**C08K 5/0025, C08K 3/013;**
**C08L 23/0869, C08L 23/0853;**
**C08L 23/0869, C08L 23/0853, C08K 5/235,**
**C08K 5/0025, C08K 3/013**

## Description

### Field of the invention

The present invention is directed to foam compositions comprising a copolymer of ethylene and an alkyl (meth)acrylate and optionally a copolymer of ethylene and vinyl acetate. The present invention is also directed to foam materials obtainable from the foam composition, and to methods of making articles comprising the foam materials as well as to footwear articles comprising the foam materials.

### Background of the Invention

Foam products of crosslinked high pressure polyethylene (HPPE) copolymers used for various applications such as e.g. for sport and leisure, packaging, building and construction, transportation, W&C, tapes and health care, are generally based on monomers from fossil origin. The most common HPPE copolymer used is a copolymer of ethylene and vinyl acetate (EVA).

Use of EVA copolymer as main polymer component of a foamed product is beneficial because of low costs and well-established processing methods for its production. It is further characterized by good adhesion to various substrates, which is often needed in foam applications.

However EVA copolymers suffer from several drawbacks. For example, some mechanical properties such as e.g. impact absorption (as reflected by deceleration and force peak of the foam), are impaired, and these properties are important for many target applications, particularly for footwear applications. Further, EVA copolymers tend to show inconsistent properties versus temperature, i.e. performance of both solid and expanded articles is completely different if used at different temperatures (e.g. 23°C versus -20°C).

Moreover, EVA copolymers are characterized by limited foaming capability. Thus, high amounts of blowing agents need to be added to the formulation in order to reach sufficiently low foam density, and for some EVA copolymers, low foam densities are even not possible to reach.

Decomposition and generation of acids when manufactured at moderate-to-high processing temperatures, particularly at longer processing times as is relevant for crosslinked and foamed products, is a further drawback in the preparation process of EVA copolymers.

To minimize the main problems or limitations in properties with foamed EVA copolymers, further polymers, such as e.g. olefin block copolymers (OBC), thermoplastic polyurethane (TPU) or styrene-ethylene-butylene-styrene (SEBS), are added in substantial amounts to the EVA copolymers. Those often high-engineered polymers are generally considerably more expensive and, thus, not applicable for low-priced foams.

For example, US Patent Application No. US 2019/0276650 A1 discloses foam compositions and uses thereof in articles of footwear, wherein the foam compositions comprise an EVA copolymer together with a complex block copolymer.

Accordingly, there is a need for new foam materials, which overcome the above-described drawbacks.

### Summary of the Invention

The objective of the present invention is to provide new foam materials, which are characterized by improved mechanical properties, and/or show more consistency of mechanical properties in a broad temperature range.

Accordingly, the present invention provides a foam composition comprising:

a) a resin composition comprising:

a1) from 25 to 100 phr of a copolymer of ethylene and alkyl (meth)acrylate, wherein the alkyl (meth)acrylate is selected from the group consisting of methyl (meth)acrylate and butyl (meth)acrylate; and
a2) from 0 to 75 phr of a copolymer of ethylene and vinyl acetate; and

b) from 1 to 25 phr of foam composition additives.

The present invention also provides a method for making an article comprising:

A) mixing a foam composition comprising:

a) a resin composition comprising:

a1) from 25 to 100 phr of a copolymer of ethylene and alkyl (meth)acrylate, wherein the alkyl (meth)acrylate is selected from the group consisting of methyl (meth)acrylate and butyl (meth)acrylate; and
a2) from 0 to 75 phr of a copolymer of ethylene and vinyl acetate;

b) from 1 to 25 phr of foam composition additives;

B) molding and solidifying the foam material in a mold; and
C) removing the foam material from the mold and producing an article comprising or consisting of the foam material.

Further, the present invention provides a foam material obtainable from the foam composition, a footwear article comprising or consisting of the foam material, and the use of the foam material in an article for improving stability to temperature variation in an article.

**Detailed Description of the Invention**

*Foam composition*

The foam composition of the present invention comprises a resin composition and foam composition additives. The foam composition is a non-crosslinked and non-foamed foam composition, from which a foam material may be obtained by blowing and crosslinking, preferably by the use of a chemical blowing agent and a peroxide crosslinking agent.

*Resin composition*

The resin composition comprises from 25 to 100 phr of a copolymer of ethylene and alkyl (meth)acrylate, wherein the alkyl (meth)acrylate is selected from the group consisting of methyl (meth)acrylate and butyl (meth)acrylate.

The term "alkyl (meth)acrylate" encompasses both "alkyl methacrylate" and "alkyl acrylate", wherein alkyl acrylate is the preferred alkyl (meth)acrylate.

Similarly, the term "methyl (meth)acrylate" (M(M)A) encompasses both "methyl methacrylate" (MMA) and "methyl acrylate" (MA), and the term "butyl (meth)acrylate" (B(M)A) encompasses both "butyl methacrylate" (BMA) and "butyl acrylate" (BA), wherein methyl acrylate (MA) and/or butyl acrylate (BA) is/are the preferred alkyl (meth)acrylate(s).

The copolymers EM(M)A and EB(M)A encompass EMMA and EMA, or EBMA and EBA, respectively.

In one embodiment, the resin composition consists only of a copolymer of ethylene and methyl (meth)acrylate (EM(M)A) or butyl (meth)acrylate (EB(M)A). In another embodiment, the resin composition comprises from 25 to 75 phr, such as from 25 to 35 phr or 65 to 75 phr, of an EM(M)A copolymer or an EB(M)A copolymer. Preferably, the resin composition comprises an EB(M)A copolymer.

The term "phr" stands for parts per hundred resin and generally denotes the weight content of a compound based on the weight of the resin, wherein the weight of the resin (usually being the base polymer) is considered as 100%. For example, 10 phr compound A means adding 10 kg of compound A to 100 kg of resin.

EM(M)A and EB(M)A copolymers are commonly known and they are generally produced by high-pressure free radical processes, such as tubular processes or autoclave processes. They are commercially available for example from the companies Dow Chemical, ExxonMobil, Westlake, Repsol and Borealis.

In the EB(M)A copolymer, the butyl (meth)acrylate may be n-butyl (meth)acrylate or iso-butyl (meth)acrylate or combinations of both. The EM(M)A and EB(M)A copolymers comprise or consist of ethylene monomers and either methyl (meth)acrylate comonomers or butyl (meth)acrylate comonomers. They are preferably free of other comonomers. The content of the (meth)acrylate comonomers preferably makes from 10 to 45 wt.%, more preferably from 15 to 35 wt.%, and most preferably from 17 to 30 wt.% of the total weight of the respective EM(M)A or EB(M)A copolymer. Comonomer contents are generally determined by NMR spectroscopy, as described herein. The copolymers may comprise additives used for their preparation or for optimization of their features.

The EM(M)A copolymer preferably has an $MFR_2$ in the range of from 1.0 to 4.0 g/10 min, more preferably from 1.5 to 2.5 g/10 min. The EB(M)A copolymer preferably has an $MFR_2$ in the range of from 2.0 to 5.0 g/10 min, more preferably from 3.0 to 4.0 g/10 min. $MFR_2$ is generally determined according to ISO 1133 at a load of 2.16 g and a temperature of 190 °C.

The EM(M)A copolymer preferably has a density in the range of from 935 to 960 kg/$m^3$, more preferably from 940 to 955 kg/$m^3$. The EB(M)A copolymer preferably has a density in the range of from 915 to 935 kg/$m^3$, more preferably from 920 to 930 kg/$m^3$. Density is generally determined according to ISO 1183.

The EM(M)A and EB(M)A copolymers preferably have a crystallization temperature (Tc) in the range of from 65 to 80 °C, more preferably from 70 to 75 °C, and/or a melting temperature (Tm) in the range of from 85 to 100 °C, more preferably from 90 to 95 °C. Crystallization temperature and melting temperature may be determined by a DCS

method according to ISO 11357-3.

The resin composition may further comprise a copolymer of ethylene and vinyl acetate (EVA) in an amount of up to 75 phr. In one embodiment, the resin composition does not comprise any EVA copolymer. In another embodiment, the resin composition comprises from 25 to 75 phr, such as from 25 to 35 phr or from 65 to 75 phr, of an EVA copolymer.

EVA copolymers are commonly known and they are generally produced as described above for the EM(M)A and EB(M)A copolymers. They are commercially available from the companies ExxonMobil, Repsol and Dow Chemical.

The EVA copolymers comprise or consist of ethylene monomers and vinyl acetate comonomers. They are preferably free of other comonomers. The content of vinyl acetate comonomers preferably makes from 10 to 90 wt.%, more preferably from 15 to 50 wt.%, and most preferably from 20 to 40 wt.% of the total weight of the EVA copolymer. In the EVA copolymers, the relative amount of vinyl acetate to ethylene influences polymer properties. Higher vinyl acetate content tends to make the polymer softer and more rubbery, while lower vinyl acetate content tends to make the polymer harder and more crystalline. Comonomer contents are generally determined by NMR spectroscopy, as described herein. The copolymers may comprise additives used for their preparation or for optimization of their features.

The EVA copolymer preferably has an $MFR_2$ in the range of from 2.0 to 4.0 g/10 min, more preferably from 2.5 to 3.5 g/10 min, determined according to ISO 1133 at a load of 2.16 g and a temperature of 190 °C.

The EVA copolymer preferably has a density in the range of from 935 to 960 kg/m$^3$, more preferably from 945 to 957 kg/m$^3$, determined according to ISO 1183.

The EVA copolymer preferably has a crystallization temperature (Tc) in the range of from 45 to 60 °C, more preferably from 50 to 55 °C, and/or a melting temperature (Tm) in the range of from 70 to 80 °C, more preferably from 72 to 77 °C, determined by a DCS method according to ISO 11357-3.

Particularly preferred resin compositions comprise from 25 to 35 phr of an EVA copolymer and from 65 to 75 phr of an EB(M)A or EM(M)A copolymer, preferably an EB(M)A copolymer; or from 65 to 75 phr of an EVA copolymer and from 25 to 35 phr of an EB(M)A or EM(M)A copolymer, preferably an EB(M)A copolymer.

*Foam composition additives*

The foam composition comprises from 1 to 25 phr of foam composition additives.

Preferably, the foam composition comprises the resin composition and at least a blowing agent and a crosslinking agent.

Preferably, the foam composition comprises a chemical blowing agent, which may be present in an amount of from 0.1 to 10 phr, more preferably from 0.1 to 3 phr. Chemical blowing agents are thermally decomposable (usually at a temperature in the range of 120 to 200 °C) and are selected from organic and inorganic chemical blowing agents. Examples of blowing agents include azodicarbonamide, 2,2'-azobisisobutynotrile, azohexahydrobenzonitrile, diazodiamino-benzene, and other azo compounds; benzenesulfonylhydrazide, benzene-1,3-sulfonylhydrazide, diphenylsulfone-3,3'-disulfonylhydrazide, diphenyloxide-4,4'-disulfonylhydrazide, 4,4'-oxybis(benzenesulfonyl hydrazide), p-toluenesulfonylhydrazide, and other sulfonylhydrazide compounds; terephthalazide, p-t-butylbenzazide, and other azide compounds; and sodium bicarbonate, ammonium bicarbonate, ammonium carbonate, and other carbonate compounds. Azodicarbonamide (ADCA) is the preferred chemical blowing agent in the present invention due to its satisfying performance / cost ratio. Additionally or alternatively, a physical blowing agent may also be used, such as halocarbons, volatile organic compounds, or non-flammable inert atmosphere gases.

It has been found that compared to pure EVA copolymers, the present resin compositions require lower concentrations of blowing agents to achieve similarly low foam density. In a particular embodiment, the chemical blowing agent is present in an amount of from 0.1 to 2 phr or even from 0.1 to 1.5 phr.

Additionally, the foam composition preferably comprises a blowing agent activator, which may be present in an amount of from 0.1 to 10 phr, more preferably from 0.1 to 3 phr. An activator for the blowing agent is used to lower the decomposition temperature of the blowing agent. Blowing agent activators include metal oxides and metal salts as well as organometallic complexes and other compounds. Examples of blowing agent activators are zinc oxide, zinc stearate, zinc nitrate, zinc phthalate, zinc carbonate, tribasic zinc sulfate, magnesium oxide and other inorganic salts and oxides; zinc fatty acid soaps, lead fatty acid soaps, cadmium fatty acid soaps, and other metal soaps; boric acid, oxalic acid, succinic acid, adipic acid, and other acids; urea, ethanolamine, glucose and glycerin; and combinations thereof. Zink oxide (ZnO) is the preferred blowing agent activator in the present invention.

Preferably, the foam composition comprises a crosslinking agent, which may be present in an amount of from 0.1 to 3 phr, more preferably from 0.1 to 1.5 phr. Crosslinking agents preferably are organic peroxides. Under the temperature conditions of the reaction, the peroxides are activated to begin the process of crosslinking by extracting a hydrogen atom from the polymer backbone and providing sites for crosslinking. Crosslinking the foam in this way during the foaming operation leads to foamed articles having improved physical properties. The nature and the level of the peroxide crosslinking agent is selected to provide suitable foaming and crosslinking in conjunction with the blowing agent. Examples of organic peroxides are dicumyl peroxide, t-butyl-cumyl peroxide, 2,5-dimethyl-2,5-di-(t-butylperoxy)hexane, 2,5-dimethyl-2,5-di-(t-butylperoxy)hexyne-3, n-butyl 4,4-di-(t-butylperoxy)valerate, 1,1-bis-(t-butylperoxy)-3,3,5-trimethylcyclohexane, t-butyl perbenzoate, and 1,3-bis(t-butyl-peroxy-isopropyl)benzene, and combinations thereof, wherein 1,3-bis(t-butyl-peroxy-isopropyl)benzene (BIBP) is the preferred crosslinking agent in the present invention. Additionally or alternatively, crosslinking may be performed by irradiation.

Examples of other additives that may optionally be used include thixotropic agents, such as chalk, lime and silicon oxide particles; lubricants; surfactants; acid scavengers; nucleating agents, such as calcium carbonate, silicon oxide, talc or lime; processing aids, such as waxes; antioxidants; UV stabilizers; dyes and pigments, such as titanium dioxide; adhesion promoters; fillers, such as talc, silicon oxide, magnesium carbonate, magnesium silicate, calcium carbonate, clay, mica, barium sulfate and magnesium hydroxide; biocides and flame retardants. Generally, the amount of these additives in the foam composition is from 0 to 20 phr, preferably from 0 to 15 phr.

In one embodiment, the foam composition comprises one or more of additives b1) to b4):

b1) from 0.1 to 10 phr, preferably from 0.1 to 3 phr, of a chemical blowing agent;
b2) from 0.1 to 3 phr, preferably from 0.1 to 1.5 phr of a crosslinking agent;
b3) from 0.1 to 10 phr, preferably from 0.1 to 3 phr, of a blowing agent activator; and
b4) from 0 to 20 phr, preferably from 0 to 15 phr, of other foam composition additives.

Preferably, the foam composition comprises at least additives b1) to b3).

In one embodiment, the foam composition comprises, preferably consists of:

a) a resin composition comprising, preferably consisting of:

a1) from 25 to 100 phr of a copolymer of ethylene and alkyl (meth)acrylate, wherein the alkyl (meth)acrylate is selected from the group consisting of methyl (meth)acrylate and butyl (meth)acrylate; and
a2) from 0 to 75 phr of a copolymer of ethylene and vinyl acetate; and

b1) from 0.1 to 10 phr, preferably from 0.1 to 3 phr, of a chemical blowing agent;
b2) from 0.1 to 3 phr, preferably from 0.1 to 1.5 phr, of a crosslinking agent;
b3) from 0.1 to 10 phr, preferably from 0.1 to 3 phr, of a blowing agent activator; and
b4) from 0 to 20 phr, preferably from 0 to 15 phr, of other foam composition additives.

In a further embodiment, the foam composition comprises, preferably consists of:

a) a resin composition comprising, preferably consisting of:

a1) from 25 to 100 phr of a copolymer of ethylene and butyl (meth)acrylate; and

a2) from 0 to 75 phr of a copolymer of ethylene and vinyl acetate; and

b1) from 0.1 to 10 phr, preferably from 0.1 to 3 phr, of a chemical blowing agent;
b2) from 0.1 to 3 phr, preferably from 0.1 to 1.5 phr, of a crosslinking agent;
b3) from 0.1 to 10 phr, preferably from 0.1 to 3 phr, of a blowing agent activator; and
b4) from 0 to 20 phr, preferably from 0.1 to 15 phr, of other foam composition additives.

In a further embodiment, the foam composition comprises, preferably consists of:

a) a resin composition comprising, preferably consisting of:

a1) from 25 to 75 phr of a copolymer of ethylene and butyl (meth)acrylate; and

a2) from 25 to 75 phr of a copolymer of ethylene and vinyl acetate; and

b1) from 0.1 to 10 phr, preferably from 0.1 to 3 phr, of a chemical blowing agent;
b2) from 0.1 to 3 phr, preferably from 0.1 to 1.5 phr, of a crosslinking agent;
b3) from 0.1 to 10 phr, preferably from 0.1 to 3 phr, of a blowing agent activator; and
b4) from 0 to 20 phr, preferably from 0 to 15 phr, of other foam composition additives.

In still further embodiments, the foam composition comprises, preferably consists of, the resin composition and

foam composition additives as described for the preferred embodiments above.

*Foam material*

The foam material of the present invention is obtainable from a foam composition by blowing and crosslinking, preferably by the use of a blowing agent and a crosslinking agent. The foam material is preferably a crosslinked foam material that was produced from a non-crosslinked non-foamed foam composition.

The foam material of the present invention denotes a solid polymeric material that comprises gas-filled areas. Solid foams can be closed-cell or open-cell. In closed-cell foam, the gas forms discrete pockets, each completely surrounded by the solid material. In open-cell foam, gas pockets connect to each other.

The foam material of the present invention is preferably a closed-cell foam material, wherein pockets filled with gas, in particular with air, are enclosed by the solid matrix of a polymeric material.

Depending on the content of the blowing agent, different densities may be adjusted. Density of the foam material of the present invention is preferably in the range of from 0.10 to 0.50 g/cm$^3$, more preferably from 0.14 to 0.35 g/cm$^3$, even more preferably from 0.16 to 0.30 g/cm$^3$, and most preferably from 0.16 to 0.28 g/cm$^3$, determined as described below.

In particular embodiments, density of the foam material of the present invention is in the range of from 0.20 to 0.28 g/cm$^3$. Embodiments with the respective densities show further improved stability to temperature variation, as determined by the DTMA method. This particularly applies to compositions comprising mixed EVA/EM(M)A and EVA/EB(M)A copolymers, as well as pure EB(M)A copolymers.

The content of crosslinked foam material is determined by the xylene hot insoluble (XHU) fraction. The XHU fraction, determined according to ISO 10147, in the foam material of the present invention is preferably in the range of from 85 to 95 wt.%, preferably from 88 to 94 wt.%, based on the total weight of the foam material.

Preferably, the foam material is characterized by at least one of the following features:

c1) a ratio of the storage modulus $E'_{-20}$ determined at -20 °C to the storage modulus $E'_{23}$ determined at 23 °C of less than 65, preferably in the range of from 1 to 65, wherein the storage moduli are determined by the Dynamic Mechanical Thermal Analysis (DMTA) as described below;

c2) a volume loss by abrasion of less than 1500 mm$^3$, preferably in the range of 300 to 1500 mm$^3$, wherein the volume loss is determined as described below; and

c3) a shrinkage of less than 5 %, preferably in the range of 1 and 5 %, based on the length average of the machine direction injection and transverse direction, wherein the shrinkage is determined as described below.

Preferably, the foam material is characterized by two, more preferably by all three, of the features c1, c2 and c3.

In one particular embodiment, the foam material is characterized by a ratio of the storage modulus $E'_{-20}$ determined at -20 °C to the storage modulus $E'_{23}$ determined at 23 °C of less than 40, preferably less than 28, and more preferably in the range of from 5 to less than 28; and/or a volume loss by abrasion of less than 1000 mm$^3$, preferably in the range of 500 to less than 1000 mm$^3$. In another particular embodiment, the foam material is characterized by a shrinkage value of less than 2.5 %.

The excellent stability to temperature variation allows the foam material to keep a consistent stiffness and performance across different seasons. Particularly advantageous is this characteristic in footwear applications, as it allows for using a shoe in summer and winter with the similar performance.

The foam material preferably has a foam hardness in the range of from 35 to 65, more preferably from 40 to 63, determined as described below.

The foam material preferably has a peak deceleration in the range of from 20 to 26 G, more preferably from 22 to 25 G, wherein G is 9.81 m/s$^2$, determined as described below at a force peak of up to 2.0 kN, preferably in the range of from 1.5 and 2.0 kN.

The deceleration and force peak are linked to the impact absorption of the foam. Lower peak deceleration and force peak allow for better impact absorption of the foam and distribution of the energy of the impact. This is particularly advantageous in footwear applications.

The foam material preferably has a tear strength in machine direction in the range of from 15 to 100 N/cm, more preferably from 25 to 95 N/cm, determined according to ISO 20875.

Higher tear strength provides for a better bonding strength. If the foam material is used e.g. as a midsole of a shoe, a higher tear strength results in better resistance to delamination and keeps a good bonding strength between the foam material midsole and the outsole and the textile part of the shoe.

The foam material is further characterized by satisfying properties such as high resiliency, lower compression

set and other mechanical properties, in particular properties which are necessary for good footwear performance.

*Preparation of the foam material*

The foam material of the present invention is prepared from a foam composition, preferably by the use of a chemical blowing agent and a peroxide crosslinking agent. The foam material is a crosslinked foam material that is produced from a non-crosslinked non-foamed foam composition of the present invention, comprising a resin composition and foam composition additives.

The foam material may be produced by different processes, such as compression molding, injection molding and hybrids of extrusion and molding. The process can comprise mixing/blending the resin composition (comprising one or more polymers) and additives to achieve a homogeneous foam composition. If the resin composition comprises more than one polymer, the polymers may be pre-blended (e.g. melt-blended) before mixing with the additives, or may be brought into contact with each other while mixing with the additives. Standard equipment may be used for mixing/blending, by adjusting the conditions such as time, temperature, shear rate, etc., to reach good dispersion without premature crosslinking or foaming. Exemplified mixing temperatures are in the range of from 80 to 150 °C.

After mixing, and optional shaping (by e.g. sheeting rolls into sheets or by extruder into pellets), the mixture can be filled in a mold (e.g. a compression mold) for foaming by exposure to higher temperatures, generally in the range of from 120 to 200 °C, depending on the kind of the blowing agent and the optional blowing agent activator. Higher temperature conditions also activate the crosslinking agent, which reacts with the polymers to give a three dimensional network.

The so formed foam material of the present invention is suitable for usual areas of foam application, for example as an insulating, sealing, or damping material, e.g., for sound damping or heat damping, or as a molded article, e.g., as cushioning for furniture or mattresses, and preferably as or in a footwear article.

*Footwear article*

The present invention is also directed to a footwear article comprising or consisting of the foam material according to any one of the above-described embodiments.

In particular, the excellent consistency of properties over a broad temperature range (e.g. determined by DMTA at -20 and 23 °C) makes the foam material of the present invention very suitable for the use as or in a footwear article.

The footwear article may be a shoe or a part thereof selected from a group consisting of shoe soles, midsoles, outsoles, unisoles, insoles, and full shoes: monobloc sandals, flip flops, and full foam material footwear.

*Methods and uses*

The present invention is also directed to a method for making an article comprising:

(A) mixing a foam composition comprising:

(a) a resin composition comprising:

a1) from 25 to 100 phr of a copolymer of ethylene and alkyl (meth)acrylate, wherein the alkyl (meth)acrylate is selected from the group consisting of methyl (meth)acrylate and butyl (meth)acrylate; and
a2) from 0 to 75 phr of a copolymer of ethylene and vinyl acetate;

(b) from 1 to 25 phr of foam composition additives;

(B) molding, preferably injection molding, and solidifying the foam material in a mold; and
(C) removing the foam material from the mold and producing an article comprising or consisting of the foam material.

The resin composition and foam composition additives may be selected from embodiments described above for the foam material.

The mixing step (A) is preferably performed at a temperature in the range of from 80 to 150 °C. The molding step (B) is preferably performed at a temperature in the range of from 120 to 200 °C.

Features of the steps (A) and (B) of the method of preparation of the foam material are described above, and these features are feature of the present method.

The foam material is removed from the mold in step (C) of the present method, and serves either directly as the intended article or it may be further processed to an article comprising the foam material. For example, the article

may be a full foam material shoe or alternatively a sole of a shoe.

The method may further comprise a step of stabilizing the foam material. Preferably, the foam material is stabilized in a stabilization tunnel under infrared light irradiation (generally in a wavelength range of 700 nm to 1 mm), preferably between 80 °C to 50 °C for 30 to 40 minutes. This step may either be performed before or after removing the foam material from the mold, preferably it is performed after removing the foam material from the mold.

In one particular embodiment, the article is a footwear article.

The present invention is also directed to the use of the foam material according to any one of the above-described embodiments in an article for improving stability to temperature variation in the article, preferably as determined via storage moduli at different temperatures. The article is preferably a footwear article as described above.

**Examples**

Measurement methods

The following measurement methods apply to the specification and experimental section of the application.

*Melt flow rate (MFR)*

The melt flow rate (MFR) was determined according to ISO 1133 and is indicated in g/10 min. The higher the melt flow rate, the lower the viscosity of the polymer.

The MFR was determined at 190 °C at a loading of 2.16 kg ($MFR_2$) or 21.6 kg ($MFR_{21}$).

*Polymer density*

Density of the polymer was determined according to ISO 1183-1:2004 (method A) on compression molded specimen prepared according to EN ISO 1872-2 (Feb 2007) and is given in $kg/m^3$.

*Comonomer content*

Quantitative nuclear-magnetic resonance (NMR) spectroscopy was used to quantify the comonomer content of the polymers.

Quantitative $^1H$ NMR spectra recorded in the molten-state using a Bruker Avance III 500 NMR spectrometer operating at 500.13 MHz. All spectra were recorded using a $^{13}C$ optimized 7 mm magic-angle spinning (MAS) probehead at 150 °C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {Klimke06, Parkinson07, Castignolles09}. Standard single-pulse excitation was employed using a recycle delay of 2s {Pollard04, Klimke06}. A total of 64 transients were acquired per spectra.

Quantitative $^1H$ NMR spectra were processed, integrated and quantitative properties determined using custom spectral analysis automation programs. All chemical shifts were internally referenced to the bulk ethylene methylene signal at 1.33 ppm.

Determination of the VA, BA and MA contents is described in detail below. Determination of the contents of the respective methylated compounds BMA and MMA can be performed in similar way by consideration of the respective molecular weights.

Assignment for butyl acrylate (BA) incorporation {Brandolini01}:

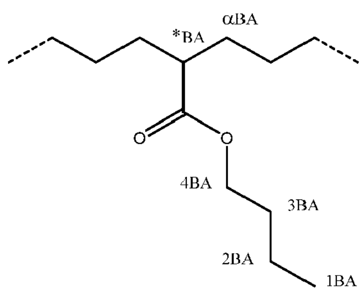

Butyl acrylate (BA) incorporation was quantified using the integral of the signal at 4.1 ppm assigned to the 4BA sites, accounting for the number of reporting nuclei per comonomer in various sequences:

$$BA = I_{4BA} / 2$$

The ethylene content was quantified using the integral of the bulk aliphatic ($I_{bulk}$) signal between 0.00 - 3.00 ppm. This integral include 1BA (3), 2BA (2), 3BA (2), *BA (1) and αBA (2) sites from isolated butyl acrylate incorporation as well as the sites from polyethylene sequences. The total ethylene content was calculated based on the bulk integral and compensating for the above mentioned BA sites:

$$E = (1/4)*[\ I_{bulk} - 10*BA\ ]$$

The total mole fractions of butyl acrylate (BA) in the polymer was calculated as:

$$fBA = BA / ( E + BA )$$

The total comonomer incorporation of butyl acrylate (BA) in mole percent was calculated from the mole fractions in the standard manner:

$$BA\ [mol\%] = 100 * fBA$$

The total comonomer incorporation of butyl acrylate (BA) in weight percent was calculated from the mole fractions and molecular weight of the monomers in the standard manner:

$$BA\ [wt\%] = 100 * (fBA * 128.17) / ( (fBA * 128.17) + ((1- fBA) * 28.05) )$$

<u>Assignment for methyl acrylate (MA) incorporation {Brandolini01}:</u>

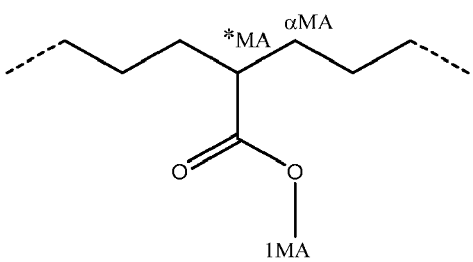

Overall methyl acrylate incorporation was quantified using the integral of the signal at 3.6 ppm assigned to the 1MA site, accounting for the number of reporting nuclei per comonomer in various sequences:

$$MA = I_{1MA} / 3$$

The ethylene content was quantified using the integral of the bulk aliphatic ($I_{bulk}$) signal between 0.00 - 3.00 ppm. The total ethylene content was calculated based on the bulk integral and compensating for the observed comonomer:

$$E = (1/4)*[ I_{bulk} - 3*MA ]$$

The total mole fractions of methyl acrylate in the polymer was calculated as:

$$fMA = MA / ( E + MA)$$

The total comonomer incorporations of methyl acrylate in mole percent was calculated from the mole fraction in the standard manner:

$$MA [mol\%] = 100 * fMA$$

The total comonomer incorporations of methyl acrylate in weight percent was calculated from the mole fractions in the standard manner:

$$MA [wt\%] = 100 * (fMA * 86.09) / ( (fMA * 86.09) + ((1-fMA) * 28.05) )$$

Assignment for vinyl acetate (VA) incorporation {Brandolini01}:

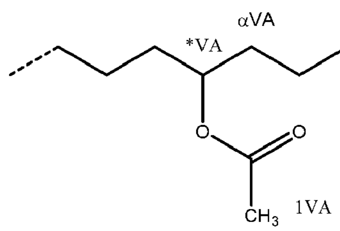

Vinyl acetate (VA) incorporation was quantified using the integral of the signal at 4.9 ppm assigned to the *VA sites, accounting for the number of reporting nuclei per comonomer in various sequences:

$$VA = I_{*VA}$$

The ethylene content was quantified using the integral of the bulk aliphatic ($I_{bulk}$) signal between 0.00 - 3.00 ppm. This integral include 1VA (3 protons) and αVA (2 protons) sites as well as the sites from polyethylene sequences. The total ethylene content was calculated based on the bulk integral and compensating for the above mentioned VA sites:

$$E = (1/4)*[ I_{bulk} - 5*VA ]$$

The total mole fractions of vinyl acetate (VA) in the polymer was calculated as:

$$fVA = VA / ( E + VA )$$

The total comonomer incorporation of vinyl acetate (VA) in mole percent was calculated from the mole fractions

in the standard manner:

$$VA\ [mol\%] = 100 * fVA$$

The total comonomer incorporation of vinyl acetate (VA) in weight percent was calculated from the mole fractions and molecular weight of the monomers in the standard manner:

$$VA\ [wt\%] = 100 * (fVA * 86.09) / ( (fVA * 86.09) + ((1- fVA) * 28.05) )$$

References:

Brandolini01: A.J. Brandolini, D.D. Hills, "NMR spectra of polymers and polymer additives", Marcel Deker Inc., 2000;

Pollard04: Pollard, M., Klimke, K., Graf, R., Spiess, H.W., Wilhelm, M., Sperber, O., Piel, C., Kaminsky, W., Macromolecules 2004; 37:813;

Klimke06: Klimke, K., Parkinson, M., Piel, C., Kaminsky, W., Spiess, H.W., Wilhelm, M., Macromol. Chem. Phys. 2006; 207:382;

Parkinson07: Parkinson, M., Klimke, K., Spiess, H.W., Wilhelm, M., Macromol. Chem. Phys. 2007; 208:2128;

Castignolles09: Castignolles, P., Graf, R., Parkinson, M., Wilhelm, M., Gaborieau, M., Polymer 50 (2009) 2373.


*XHU fraction*

The xylene hot insoluble amount (XHU) was analyzed according to ISO 10147. Therefore, 1 g of the sample is weighed out exactly to 0.1 mg ($m_1$) and placed in a pouch made of stainless steel mesh of the following material ("stainless steal quality 1.4401"). The pouch with polymer sample was weighed out exactly to 0.1 mg ($m_2$), and placed in a round flask filled with 700 mL xylene (ortho- or paraxylene, with a purity chromatography >98%). The xylene was kept under reflux conditions for 5h. The pouch containing the insoluble matter was taken out of the flask, washed from the polymer solution residues with a fresh portion of 700 mL xylene under reflux conditions for another 30 minutes. Afterwards the pouch was taken out of the flask, dried under vacuum at 90 °C to constant mass. After cooled to room temperature in a desiccator, the pouch was weighed out exactly to the nearest 0.1 mg ($m_3$).

$$\%XHU = \frac{m_3 - (m_2 - m_1)}{m_1} * 100$$

XHU = Xylene hot insoluble amount
$m_1$ = sample weight in g
$m_2$ = weight of pouch with the sample in g
$m_3$ = weight of pouch with the insoluble residue in g

By evaporating the xylene from the xylene solution the xylene hot soluble fraction was obtained. This fraction was dried at 60 °C under vacuum overnight prior to further analysis with other analytical tests like NMR spectroscopy.

*Melting and crystallization temperatures*

A TA Instruments Q2000 Differential Scanning Calorimeter calibrated with Indium, Zinc, and Tin and operating under 50 mL/min of nitrogen flow was used. The employed thermal program consisted of a first heating step from 0 to 180°C to erase the previous thermal history and a cooling step at 10 °C/min. The melting behaviour was obtained by performing a second heating scan from 0 to 180 °C at 10 °C/min. The crystallization and melting temperatures were taken as the peak values from the cooling and second heating scan respectively. The DSC trace was integrated from 30 °C to the end of the melting peak to evaluate the melting enthalpy.

*Rheological measurements*

a) Dynamic Shear Measurements (frequency sweep measurements)

The characterization of melt of polymer composition or polymer as given above or below in the context by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at 190 °C applying a frequency range between 0.01 and 600 rad/s and setting a gap of 1.3 mm.

In a dynamic shear experiment, the probe was subjected to a homogeneous deformation at a sinusoidal varying shear strain or shear stress (strain and stress controlled mode, respectively). On a controlled strain experiment, the probe was subjected to a sinusoidal strain that can be expressed by

$$\gamma(t) = \gamma_0 \sin(\omega t) \quad (1)$$

If the applied strain is within the linear viscoelastic regime, the resulting sinusoidal stress response can be given by

$$\sigma(t) = \sigma_0 \sin(\omega t + \delta) \quad (2)$$

where

$\sigma_0$ and $\gamma_0$ are the stress and strain amplitudes, respectively
$\omega$ is the angular frequency
$\delta$ is the phase shift (loss angle between applied strain and stress response)
t is the time

Dynamic test results are typically expressed by means of several different rheological functions, namely the shear storage modulus G', the shear loss modulus, G", the complex shear modulus, G*, the complex shear viscosity, η*, the dynamic shear viscosity, η', the out-of-phase component of the complex shear viscosity η" and the loss tangent, tan δ which can be expressed as follows:

$$G' = \frac{\sigma_0}{\gamma_0}\cos\delta \text{ [Pa]} \quad (3)$$

$$G'' = \frac{\sigma_0}{\gamma_0}\sin\delta \text{ [Pa]} \quad (4)$$

$$G^* = G' + iG'' \text{ [Pa]} \quad (5)$$

$$\eta^* = \eta' - i\eta'' \text{ [Pa·s]} \quad (6)$$

$$\eta' = \frac{G''}{\omega} \text{ [Pa·s]} \quad (7)$$

$$\eta'' = \frac{G'}{\omega} \text{ [Pa·s]} \quad (8)$$

The values of storage modulus (G'), loss modulus (G"), complex modulus (G*) and complex viscosity (η*) were

obtained as a function of frequency ($\omega$).

Thereby, e.g. $\eta^*_{30rad/s}$ ($eta^*_{300rad/s}$ or $eta_{300}$) is used as abbreviation for the complex viscosity at the frequency of 300 rad/s and $\eta^*_{0.05rad/s}$ ($eta^*_{0.05rad/s}$ or $eta_{0.05}$) is used as abbreviation for the complex viscosity at the frequency of 0.05 rad/s.

The polydispersity index, *PI,* is defined by equation 10.

$$PI = \frac{10^5}{G'(\omega_{COP})}, \qquad \omega_{COP} = \omega \text{ for } (G' = G'') \qquad (10)$$

where $\omega_{COP}$ is the cross-over angular frequency, determined as the angular frequency for which the storage modulus, G', equals the loss modulus, G".

The values were determined by means of a single point interpolation procedure, as defined by Rheoplus software. In situations for which a given G* value was not experimentally reached, the value was determined by means of an extrapolation, using the same procedure as before. In both cases (interpolation or extrapolation), the option from Rheoplus *"Interpolate y-values to x-values from parameter"* and the *"logarithmic interpolation type"* were applied.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362.

[2] The influence of molecular structure on some rheological properties of polyethylene", Heino, E.L., Borealis Polymers Oy, Porvoo, Finland, Annual Transactions of the Nordic Rheology Society, 1995.).

[3] Definition of terms relating to the non-ultimate mechanical properties of polymers, Pure & Appl. Chem., Vol. 70, No. 3, pp. 701-754, 1998.

b) Large Amplitude Oscillatory Shear (LAOS)

The investigation of the non-linear viscoelastic behavior under shear flow was done resorting to Large Amplitude Oscillatory Shear. The method requires the application of a sinusoidal strain amplitude, yo, imposed at a given angular frequency, $\omega$, for a given time, t. Provided that the applied sinusoidal strain is high enough, a non-linear response is generated. The stress, $\sigma$, is in this case a function of the applied strain amplitude, time and the angular frequency. Under these conditions, the non-linear stress response is still a periodic function; however, it can no longer be expressed by a single harmonic sinusoid. The stress resulting from linear viscoelastic response [1-3] can be expressed by a Fourier series, which includes higher harmonics contributions:

$$\sigma(t,\omega,\gamma_0) = \gamma_0 \cdot \sum_n [G'_n(\omega,\gamma_0) \cdot \sin(n\omega t) + G''_n(\omega,\gamma_0) \cdot \cos(n\omega t)]$$

with

$\sigma$ = stress response
t = time
$\omega$ = frequency
$\gamma_0$ = strain amplitude
n = harmonic number
$G'_n$ = n order elastic Fourier coefficient
$G''_n$ = n order viscous Fourier coefficient

The non-linear viscoelastic response was analyzed applying Large Amplitude Oscillatory Shear (LAOS). Time sweep measurements were undertaken on an RPA 2000 rheometer from Alpha Technologies coupled with a standard biconical die. During the course of the measurement the test chamber was sealed and a pressure of about 6 MPa was applied. The LAOS test was done applying a temperature of 190 °C, an angular frequency of 0.628 rad/s and a strain of 1000 % ($LAOS_{NLF}$ (1000%)). In order to ensure that steady state conditions were reached, the non-linear response was only determined after at least 20 cycles per measurement were completed. The Large Amplitude Oscillatory Shear Non-Linear Factor ($LAOS_{NLF}$) is defined by:

$$LAOS_{NLF}(X\%) = \left|\frac{G'_1}{G'_3}\right|$$

with

$G'_1$ = first order elastic Fourier coefficient
$G'_3$ = third order elastic Fourier coefficient

References:

[1] J. M. Dealy, K. F. Wissbrun, Melt Rheology and Its Role in Plastics Processing: Theory and Applications; edited by Van Nostrand Reinhold, New York (1990).

[2] S. Filipe, Non-Linear Rheology of Polymer Melts, AIP Conference Proceedings 1152, pp. 168-174 (2009) 3.

[3] M. Wilhelm, Macromol. Mat. Eng. 287, 83-105 (2002).

[4]S. Filipe, K. Hofstadler, K. Klimke, A. T. Tran, Non-Linear Rheological Parameters for Characterisation of Molecular Structural Properties in Polyolefins, Proceedings of Annual European Rheology Conference, 135 (2010).

[5]S. Filipe, K. Klimke, A. T. Tran, J. Reussner, Proceedings of Novel Non-Linear Rheological Parameters for Molecular Structural Characterisation of Polyolefins, Novel Trends in Rheology IV, Zlin, Check Republik (2011).

[6]K. Klimke, S. Filipe, A. T. Tran, Non-linear rheological parameters for characterization of molecular structural properties in polyolefins, Proceedings of European Polymer Conference, Granada, Spain (2011).

*Stability to temperature variation (DMTA): measurement of foam*

Stability to temperature variation was determined by Dynamic Mechanical Thermal Analysis (DMTA). Cylinder foam samples having height of 10 mm and diameter of 20 mm were used. They were tested at a fixed stress of 0.270 MPa, frequency of 3 Hz, heating rate of 2 °C / min in a temperature sweep mode from -30 to 80 °C. Before a test was started, a sample is stabilized at -30 °C for 8 min. The apparatus used for DMTA was Metravib DMA +300 or +1000. A ratio was calculated from the obtained storage modulus (in MPa) $E'_{-20}$ determined at -20 °C and the storage modulus $E'_{23}$ determined at 23 °C.

*Stability to temperature variation (DMTA): measurement of pellet*

In a dynamic mechanical thermal analysis in tensile mode the sample was subjected to a constant load together with an applied sinusoidal tensile strain. Under low enough deformation material response is kept within the linear viscoelastic region which is independent of strain amplitude.

The tensile storage modulus E' (1) and the tensile loss modulus E" (2) were determined from the following equations

$$E' = \frac{\Delta F_A}{s_A} * \frac{L_a}{bd} * \cos\delta \ [\mathrm{Pa}] \qquad (1)$$

$$E'' = \frac{\Delta F_A}{s_A} * \frac{L_a}{bd} * \sin\delta \ [\mathrm{Pa}] \qquad (2)$$

where

$\Delta F_A$ is the measured amplitude of dynamic force, in newton

$S_A$ is the measured amplitude of the dynamic displacement, in meters

$L_a$ is the distance between the clamps, in meters

b is the width of the specimen, in meters

d is the thickness of the specimen, in meters

$\delta$ is the measured phase angle, in degrees.

The determination of the so-called damping factor was done as described in following equation.

$$\tan\delta = \frac{E''}{E'} \quad [1]$$

The characterization of dynamic-mechanic properties complies with ISO standards 6721-1, 6721-4, 6721-11. The measurements were performed on a "Netzsch DMA 242E Artemis" strain/stress-controlled dynamic mechanical Analyzer, equipped with a tensional-sample holder for rectangular specimen geometry. Measurements were undertaken on rectangular sample cut from compression moulded plates produced with a "Collin 400P/M" thermo-press, using 200 °C and an annealing time of 300 seconds for melting at a pressure of 5 bar, then a compression pressure of 25 bar was used for 300 seconds and a pressure of 50 bar for cooling down to room-temperature using a cooling rate of 15 K/min. The compression moulded plate with a geometry of 100 × 100 × 1 mm was prepared stored for a minimal rest time of 96 hours of compression molding. The rectangular sample prepared using a laboratory cutter to ensure a geometry of length × width × thickness of 20 mm × 2 mm × 1 mm for clambing the specimen. The free tensile-length was about 10 mm measured with a calliper at room temperature with an accuracy of 0.05 mm. The width and the thickness were measured using a suitable length gauge with an accuracy of 0,001 mm. The dynamic mechanic thermal analysis was performed under inert atmosphere using liquid nitrogen for cooling within the temperature range from -170 °C to +90 °C with a heating rate of 2 K/min, a frequency of 1 Hz, in strain-stress controlled mode with a maximum dynamic applied stress of 1.70 MPa, a static load of 0.20 MPa and a maximum strain of 0.20 %. Avoiding deformation the clambing of the specimens were performed in the temperature-range from -100 °C to -130 °C with a torque of 2.5 cNm on screws. The conditioning at the start-temperature of - 170 °C was carried out with an isothermal section of 30 minutes, wherein the last 5 minutes had a change in E' equal or less than 5 MPa per minute. A ratio was calculated from the obtained storage modulus (in MPa) $E'_{-20}$ determined at -20 °C and the storage modulus $E'_{23}$ determined at 23 °C.

References:

[1] "Dynamic mechanical analysis: a practical introduction" Kevin P. Menard © 2008 by Taylor & Francis Group, LLC, Dynamic Testing and Instrumentation, 71-76, 2008

*Foam density*

Foam density of the foam material (measured at SGS lab) was determined following the SATRA test method TM134:1998 at 23 ± 2 °C and 50 ± 5 % RH.

Foam density of the foam material was determined according to the "Archimedes" principle measuring the weights of the samples in two media of different densities (water and air). The test sample was first weighed in air. It was then reweighed fully immersed in water. The apparent loss in weight is equal to the weight of water displaced. The volume displacement, equal to the volume of the test piece, was then calculated and divided into the weight in air to give the density.

The test samples and water were conditioned for 3 hours at ambient conditions (23 ± 2 °C) before measurement.

*Volume loss by abrasion*

Volume loss by abrasion of the foam material (measured at SGS lab) was determined following the SATRA test method TM174:1994 (non-rotating) at 23 ± 2 °C and 50 ± 5 % RH.

Five days after preparation of the foam material, three test samples of 16 mm in diameter were cut from the foam material having a thickness of 10 mm. The samples were conditioned for 3 hours at ambient conditions (23 ± 2

°C and 50 ± 5 % RH).

Test were conducted at an abrasion testing machine (rotating drum) of Cotech with the following settings: Force: 10 ± 0.2 N; Carriage speed: 4.2 ± 0.04 mm/drum revolution; Drum speed: 40 ± 1 rpm; and the following adjustments and conditions: 2.0 ± 0.2 mm of the sample was showing from the opening; 84 revolutions of the cylinder (corresponding to 40 m) for measurement, vacuum conditions.

First a standard rubber sample (same dimensions as the test samples) was measured. The sample was removed from the machine and weighed to obtain a value [M0]. The measurement was repeated with the same sample and weighed to obtain a value [M1].

Mass loss was calculated by: [ML] = [M1] - [M0]. Only measurements with an [ML] in the range of 180 to 220 mg were considered and recorded as [C1] value. The measurement was repeated with a test sample in the analogous way to determine mass loss [T1]. The measurement was repeated with 2 standard rubber samples and two test samples to obtain [C2], [C3], [T2] and [T3].

Volume loss was determined by: (400 x [Tn]) / {[D] x ([Cn] + [Cn + 1])}, wherein the average of three volume loss values was used. D stands for density of the test sample, as determined according to SATRA TM134.

*Shrinkage*

Shrinkage of the foam material (measured at SGS lab) was determined following the SATRA test method TM70:2001 with an exposure time of 24 hours at 70 °C. Two test samples of 150 mm x 25 mm were cut from the foam material having a thickness of 10 mm, wherein one sample was cut in machine injection direction and the other in transverse direction. The samples were conditioned for 24 hours at ambient conditions (23 ± 2 °C and 50 ± 5 % RH).

Two shallow cuts of 0.5 mm across each sample (about) 100 mm apart were made, and the distance between the cuts was measured and recorded as [D1] and [D2] (for both samples). The samples were heated in an oven at 70 ± 1 °C for 24 hours, removed from the oven and cooled at ambient conditions for 30 minutes. The distance between the cuts was again measured and recorded as [F1] and [F2] (for both samples). The percentage of shrinkage [P1] and [P2] was determined as [P1] = {([F1] - [D1]) * 100} / [D1] and [P2] = {([F2] - [D2]) * 100} / [D2], and an average was made from these values to obtain the final percentage of shrinkage.

*Foam hardness*

Foam hardness (measured at SGS lab) was determined according to the test method SATRA TM205 at 23 ± 2 °C and 50 ± 5 % RH.

*Tear strength*

Tear strength (measured at SGS lab) in machine direction was determined according to ISO 34-1:2015 at 23 ± 2 °C and 50 ± 5 % RH and a speed of 100 mm/min.

*Deceleration / Force peak*

Deceleration and force peak were determined in the following way:
The Dynatup impact machine (or vertical drop shaft) was equipped with two force sensors: one at the level of the impactor and one at the level of the base (where the foam rests). Each force sensor was sampled at 10 KHz and begins recording when the tip of the impactor is 1 cm from the surface of the foam (there is a beam sensor (Beam Photoelectric Sensor) to be manually adjusted depending on the thickness of the foam). The impactor is spherical with the radius of 65 mm.

Therefore a time/force curve was obtained starting just before the impact and covering the entire time of the impact and the following two or three rebounds.

The data used were those of the sensor installed at the level of the impactor. The force peak corresponded to the maximum force recorded during the first impact.

Deceleration was measured on the same machine and at the same time when force peak was measured. Position data provided by the Codamotion motion analysis system (Coda CX1, Charnwood Dynamics Ltd) were used. Position data were sampled at 800 Hz. The system was calibrated so that there was movement only in the vertical axis. The position data were derived twice to obtain the acceleration curve (Position -> Velocity -> Acceleration). The deceleration peak corresponded to the maximum acceleration value obtained during the first impact. The deceleration was initially calculated in $mm/s^2$ and then converted to $m/s^2$ and G.

Experimental

*Production of EVA, EMA and EBA copolymers*

Production methods for EVA, EMA and EBA copolymers are described below. Similar methods may be used for the production of the EMMA and EBMA copolymers, comprising the respective methylated compounds.

EVA

Fresh and recycled ethylene, comonomer and optionally chain transfer agent was compressed to the desired reactor pressure (usually between 1000 and 2000 bars (between 100 and 200 MPa)). The temperature of the compressed stream was adjusted to reach the desired reactor inlet conditions (usually between 150 to 280 °C). Polymerization was initiated and maintained by means of injecting commercially available peroxide radical initiators dissolved in an essentially inert hydrocarbon solvent at one or multiple points along the reactor. Comonomer, initiator, and optionally chain transfer agent flows, were adjusted to reach the desired polymer properties such as comonomer content and MFR. The reaction mixture was depressurized by a pressure control valve, cooled and the polymer was separated from unreacted gas.

EMA

Fresh ethylene and recycled ethylene and comonomer methyl acrylate were compressed to reach an initial reactor pressure of 2650 bars (265 MPa) in two parallel streams to supply the front and the side of a split feed 2 zone reactor with a varying L/D between around 17300 to 30400. Comonomer was added in amounts to reach 24 wt.% in the final polymer by feeding to the compressor streams in a ratio of 1:1 (front:side). An $MFR_2$ of the final polymer of 2 g/10 min was maintained. After compression, the front stream was heated to 160 °C in a preheating section before entering the front zone of the reactor and the side stream was cooled and entered at the side of the reactor. Mixtures of commercially available peroxide radical initiators dissolved in an essentially inert hydrocarbon solvent were injected after the preheating section and at one more position along the reactor in amounts sufficient for the exothermal polymerization reaction to reach peak temperatures of 270 °C and 270 °C, respectively, with cooling in-between to 170 °C. The reaction mixture was depressurized by a pressure control valve, cooled and the polymer was separated from unreacted gas.

EBA

Fresh ethylene and recycled ethylene and comonomer butyl acrylate were compressed to reach an initial reactor pressure of 2550 bars (255 MPa) in two parallel streams to supply the front and the side of a split feed 2 zone reactor with a varying L/D between around 17300 to 30400. Comonomer was added in amounts to reach 23 wt.% in the final polymer by feeding to the compressor streams in a ratio of 1:1 (front:side). An $MFR_2$ of the final polymer of 4 g/10 min was maintained. After compression, the front stream was heated to 160 °C in a preheating section before entering the front zone of the reactor and the side stream was cooled and entered at the side of the reactor. Mixtures of commercially available peroxide radical initiators dissolved in an essentially inert hydrocarbon solvent were injected after the preheating section and at one more position along the reactor in amounts sufficient for the exothermal polymerization reaction to reach peak temperatures of 285 °C and 285 °C respectively, with cooling in-between to 165 °C. The reaction mixture was depressurized by a pressure control valve, cooled and the polymer was separated from unreacted gas.

*Foam*

Foam materials were produced from foam compositions containing single EMA, EBA or EVA copolymers as well as from EVA/EMA and EVA/EBA copolymer dry blends. Properties of the single copolymers (before foaming) are summarized in the following Table 1.

**Table 1**: Properties of EMA, EBA and EVA copolymers.

| Copolymer | Method | EMA | EBA | EVA |
|---|---|---|---|---|
| **$MFR_2$ (g/10min, 190 °C)** | ISO 1133 | 1.92 | 3.46 | 2.91 |
| **$MFR_{21}$ (g/10min, 190 °C)** | | 132.13 | 168.51 | 142.02 |
| **Density (kg/$m^3$)** | ISO 1183 | 948 | 925.5 | 952 |
| **Comonomer** | | MA | BA | VA |

(continued)

| Copolymer | Method | EMA | EBA | EVA |
|---|---|---|---|---|
| **Comonomer content** | NMR, melt-state $^1H$ | 23.00 | 21.92 | 27.40 |
| **Crystallization enthalpy (J/g)** | DSC | 46.6 | 55.5 | 61.1 |
| **Melting enthalpy (J/g)** | | 47.4 | 55.6 | 56.6 |
| **Tc (°C)** | | 70.8 | 74.0 | 53.1 |
| **Tm (°C)** | | 90.3 | 94.2 | 74.5 |
| **E' at -20 °C (MPa)** | DMTA | 218.200 | 205.638 | 346.219 |
| **E' at 23 °C (MPa)** | | 27.106 | 45.100 | 27.174 |
| **E' at -20 °C / E' at 23 °C** | | 8.05 | 4.56 | 12.74 |
| **190 °C_Eta at 0.05 rad/s (Pa.s)** | Frequency sweep | 15710 | 5822 | 5842 |
| **190 °C_Eta at 300 rad/s (Pa.s)** | | 321 | 242 | 321 |
| **190 °C_PI (1/Pa)** | | 4.55 | 4.31 | 2.58 |
| **190 °C_Wc (rad/s)** | | 27.45 | 57.10 | 95.37 |
| **LAOS-NLF 1000** % | Laos | 2.739 | 3.541 | 3.130 |

The foam compositions containing either the EMA copolymer or the EBA copolymer and optionally the EVA copolymer were prepared and are compositions according to the invention (IE1 to IE10). Comparative compositions contained only the EVA copolymer (CE1 and CE2). Table 2 indicates the contents of the foam compositions.

**Table 2:** Contents of the foam compositions.

| Contents (phr) | EVA | | EMA | | EBA | | EMA/EVA | | | EBA/EVA | | |
|---|---|---|---|---|---|---|---|---|---|---|---|---|
| | **CE1** | **CE2** | **IE1** | **IE2** | **IE3** | **IE4** | **IE5** | **IE6** | **IE7** | **IE8** | **IE9** | **IE10** |
| **EVA** | 100 | 100 | | | | | 30 | 70 | 30 | 30 | 70 | 30 |
| **EMA** | | | 100 | 100 | | | 70 | 30 | 70 | | | |
| **EBA** | | | | | 100 | 100 | | | | 70 | 30 | 70 |
| **AC3000** | 2 | 2.5 | 2 | 1.2 | 2 | 1.2 | 2 | 2 | 1.2 | 2 | 2 | 1.2 |
| **BIBP** | 0.9 | 0.9 | 0.9 | 0.9 | 0.9 | 0.9 | 0.9 | 0.9 | 0.9 | 0.9 | 0.9 | 0.9 |
| **ZnO** | 2 | 2 | 2 | 2 | 2 | 2 | 2 | 2 | 2 | 2 | 2 | 2 |
| **additives** | 9.24 | 9.24 | 9.24 | 9.24 | 9.24 | 9.24 | 9.24 | 9.24 | 9.24 | 9.24 | 9.24 | 9.24 |
| AC3000 = azodicarbonamide (blowing agent)<br>BIBP = 1,3-bis(t-butyl-peroxy-isopropyl)benzene (crosslinking agent)<br>ZnO (blowing agent activator)<br>Additives = mixture of fillers, pigments and other additives | | | | | | | | | | | | |

The compositions were mixed and extruded according to methods as described above, and properties of the (foamed and crosslinked) foam materials were determined. These properties are summarized in Table 3 and 4.

**Table 3:** Properties of the foam materials (1).

| Property (unit) | EVA | | EMA | | EBA | |
|---|---|---|---|---|---|---|
| | **CE1** | **CE2** | **IE1** | **IE2** | **IE3** | **IE4** |
| Hardness | 53.5 | 47.0 | 39.7 | 52.5 | 47.5 | 62.5 |
| Density (g/cm$^3$) | 0.220 | 0.181 | 0.163 | 0.240 | 0.169 | 0.243 |

(continued)

| Property (unit) | EVA | | EMA | | EBA | |
|---|---|---|---|---|---|---|
| | CE1 | CE2 | IE1 | IE2 | IE3 | IE4 |
| Shrinkage (%) | na | na | 3.80 | 2.60 | 2.00 | 1.60 |
| Volume loss ($mm^3$) | 681.90 | 920.00 | 1302.00 | 868.70 | 1070.60 | 620.20 |
| Deceleration (G) | 24.56 | 24.31 | 22.65 | 22.52 | 22.27 | 23.80 |
| Force peak (kN) | 2.02 | 1.93 | 1.55 | 1.52 | 1.55 | |
| DMA_E' at -20 °C (MPa) | 54.60 | na | 22.97 | 65.37 | 17.10 | na |
| DMA_E' at 23 °C (MPa) | 0.81 | na | 0.58 | 1.38 | 0.95 | na |
| DMA_E' at -20 °C / E' at 23 °C | 67.67 | na | 39.71 | 47.47 | 18.02 | na |
| XHU (%) | na | na | 87.89 | 86.86 | 88.19 | 88.18 |
| MA of XHU (%) | na | na | 21.10 | 21.00 | na | na |
| BA of XHU (%) | na | na | na | na | 17.20 | 16.10 |

**Table 4:** Properties of the foam materials (2).

| Property (unit) | EMA/EVA | | | EBA/EVA | | |
|---|---|---|---|---|---|---|
| | IE5 | IE6 | IE7 | IE8 | IE9 | IE10 |
| Hardness | 43.5 | 56.5 | 53.5 | 52.5 | 51.7 | 62.0 |
| Density ($g/cm^3$) | 0.173 | 0.304 | 0.264 | 0.183 | 0.195 | 0.269 |
| Shrinkage (%) | 4.80 | 4.10 | na | na | 4.50 | na |
| Volume loss ($mm^3$) | 1106.50 | 605.80 | 654.50 | 829.30 | 791.30 | 548.30 |
| Deceleration (G) | 24.13 | 24.33 | 23.86 | 23.14 | 23.80 | 24.26 |
| Force peak (kN) | 1.94 | 1.83 | 1.82 | 1.69 | 1.81 | 1.85 |
| DMA_E' at -20 °C (MPa) | 21.77 | 88.33 | 75.50 | 30.90 | 31.96 | 55.40 |
| DMA_E' at 23 °C (MPa) | 0.34 | 2.47 | 2.58 | 1.32 | 0.88 | 5.51 |
| DMA_E' at -20 °C / E' at 23 °C | 63.17 | 35.79 | 29.26 | 23.41 | na | 10.05 |
| XHU (%) | 89.27 | 92.73 | na | na | 89.81 | na |
| MA of XHU (%) | 14.70 | 7.70 | na | na | na | na |
| BA of XHU (%) | na | na | na | na | na | na |

The examples show that lower contents of blowing agent (AC3000) is needed to achieve a given (lower) foam density in the inventive examples in contrast to the comparative examples. This is particularly seen when 2 phr of AC3000 are used, and the inventive examples (except for IE6) reach a lower foam density than the comparative example CE1. Even when 2.5 phr of AC3000 is used in comparative example CE2, the density is higher than in several of the inventive examples at a content of 2 phr of AC3000.

All inventive examples show better stability to temperature variation than the comparative examples, as evaluated by the ratio of tensile moduli E' at -20 °C and at 23 °C by the DMTA method.

Lower deceleration is achieved by all inventive examples versus the comparative examples. Force peak is also lower at the same or lower dosage of AC3000.

## Claims

**1.** A foam composition comprising:

a) a resin composition comprising:

a1) from 25 to 100 phr of a copolymer of ethylene and alkyl (meth)acrylate, wherein the alkyl (meth)acrylate is selected from the group consisting of methyl (meth)acrylate and butyl (meth)acrylate; and
a2) from 0 to 75 phr of a copolymer of ethylene and vinyl acetate; and

b) from 1 to 25 phr of foam composition additives.

**2.** The foam composition according to claim 1, wherein the foam composition comprises one or more of additives b1) to b4):

b1) from 0.1 to 10 phr, preferably from 0.1 to 3 phr, of a chemical blowing agent;
b2) from 0.1 to 3 phr, preferably from 0.1 to 1.5 phr, of a crosslinking agent;
b3) from 0.1 to 10 phr, preferably from 0.1 to 3 phr, of a blowing agent activator; and
b4) from 0 to 20 phr, preferably from 0 to 15 phr, of other foam composition additives.

**3.** The foam composition according to any one of the preceding claims, consisting of:

a) a resin composition comprising:

a1) from 25 to 100 phr of a copolymer of ethylene and alkyl (meth)acrylate, wherein the alkyl (meth)acrylate is selected from the group consisting of methyl (meth)acrylate and butyl (meth)acrylate; and
a2) from 0 to 75 phr of a copolymer of ethylene and vinyl acetate; and

b1) from 0.1 to 10 phr, preferably from 0.1 to 3 phr, of a chemical blowing agent;
b2) from 0.1 to 3 phr, preferably from 0.1 to 1.5 phr, of a crosslinking agent;
b3) from 0.1 to 10 phr, preferably from 0.1 to 3 phr, of a blowing agent activator; and
b4) from 0 to 20 phr, preferably from 0 to 15 phr, of other foam composition additives.

**4.** The foam composition according to any one of the preceding claims, wherein the resin composition comprises:

a1) from 25 to 75 phr of a copolymer of ethylene and alkyl (meth)acrylate, wherein the alkyl (meth)acrylate is selected from the group consisting of methyl (meth)acrylate and butyl (meth)acrylate; and
a2) from 25 to 75 phr of a copolymer of ethylene and vinyl acetate.

**5.** The foam composition according to any one of the preceding claims, wherein the copolymer of ethylene and alkyl (meth)acrylate is a copolymer of ethylene and butyl (meth)acrylate, preferably having an $MFR_2$ in the range of from 2.0 to 5.0, preferably from 3.0 to 4.0 (g/10 min, 190 °C), determined according to ISO 1133.

**6.** The foam composition according to any one of claims 1 to 4, wherein the copolymer of ethylene and alkyl (meth)acrylate is a copolymer of ethylene and methyl (meth)acrylate, preferably having an $MFR_2$ in the range of from 1.0 to 4.0, preferably from 1.5 to 2.5 (g/10 min, 190 °C), determined according to ISO 1133.

**7.** The foam composition according to any one of the preceding claims, comprising from 0.1 to 3 phr of the blowing agent.

**8.** The foam composition according to any one of the preceding claims, wherein the content of the alkyl (meth)acrylate comonomer incorporated into the copolymer of ethylene and alkyl (meth)acrylate, determined by NMR spectroscopy, makes from 15 to 35 wt.% of the total weight of the copolymer of ethylene and alkyl (meth)acrylate.

**9.** A foam material obtainable from a foam composition according to any one of the preceding claims.

**10.** The foam material according to claim 9, wherein the foam material is **characterized by** at least one of the following features:

c1) a ratio of the storage modulus $E'_{-20}$ determined at -20°C to the storage modulus $E'_{23}$ determined at 23°C of less than 65, wherein the storage moduli are determined by the Dynamic Mechanical Thermal Analysis (DMTA) as described in the specification;
c2) a volume loss by abrasion of less than 1500 $mm^3$, wherein the volume loss by abrasion is determined as

described in the specification; and
c3) a shrinkage of less than 5 %, wherein the shrinkage is determined as described in the specification.

**11.** The foam material according to any one of claims 9 and 10 having a density in the range of from 0.16 to 0.28 g/cm$^3$, preferably from 0.20 to 0.28 g/cm$^3$, determined as described in the specification.

**12.** A footwear article comprising or consisting of the foam material according to any one of claims 9 to 11.

**13.** A method for making an article comprising:

(A) mixing a foam composition comprising:

(a) a resin composition comprising:

a1) from 25 to 100 phr of a copolymer of ethylene and alkyl (meth)acrylate, wherein the alkyl (meth)acrylate is selected from the group consisting of methyl (meth)acrylate and butyl (meth)acrylate; and
a2) from 0 to 75 phr of a copolymer of ethylene and vinyl acetate;

(b) from 1 to 25 phr of foam composition additives;

(B) molding and solidifying a foam material in a mold; and
(C) removing the foam material from the mold and producing an article comprising or consisting of the foam material.

**14.** The method according to claim 13, wherein the article is a footwear article.

**15.** Use of the foam material according to any one of claims 9 to 11 in an article for improving stability to temperature variation in the article, wherein the article is preferably a footwear article.

Europäisches Patentamt
European Patent Office
Office européen des brevets

# EUROPEAN SEARCH REPORT

Application Number
EP 22 18 4640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/134354 A2 (DU PONT [US]) 12 September 2013 (2013-09-12) * examples 1-6 * | 1-15 | INV. C08J9/00 A43B13/00 C08J9/06 C08J9/10 C08L23/08 |
| X | EP 3 750 951 A1 (SIKA TECHNOLOGY AG) 16 December 2020 (2020-12-16) * examples 1-9; table 1 * * paragraphs [0017], [0201], [0214] * | 1-15 | |
| X | WO 2006/039428 A1 (DU PONT [US]; HAUSMANN KARLHEINZ [CH] ET AL.) 13 April 2006 (2006-04-13) * page 14, line 1 - page 17, line 12; tables I, II * | 1-15 | |
| X | WO 2010/022208 A1 (NOVA CHEM INC [US]; CELLECT LLC [US] ET AL.) 25 February 2010 (2010-02-25) * figures 11-12; examples 4 (samples 15,16) * | 1,9, 12-14 | |

TECHNICAL FIELDS SEARCHED (IPC)

C08J
B29D
A43B
C08L

The present search report has been drawn up for all claims

2

| Place of search | Date of completion of the search | Examiner |
|---|---|---|
| The Hague | 8 December 2022 | Mayer, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 18 4640

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2022

| Patent document cited in search report | Publication date | Patent family member(s) | Publication date |
|---|---|---|---|
| WO 2013134354 A2 | 12-09-2013 | CN 103304882 A | 18-09-2013 |
| | | WO 2013134354 A2 | 12-09-2013 |
| EP 3750951 A1 | 16-12-2020 | CN 113825794 A | 21-12-2021 |
| | | EP 3750951 A1 | 16-12-2020 |
| | | EP 3983475 A1 | 20-04-2022 |
| | | JP 2022535654 A | 10-08-2022 |
| | | US 2022227955 A1 | 21-07-2022 |
| | | WO 2020249752 A1 | 17-12-2020 |
| WO 2006039428 A1 | 13-04-2006 | CN 101065425 A | 31-10-2007 |
| | | EP 1794222 A1 | 13-06-2007 |
| | | JP 5044408 B2 | 10-10-2012 |
| | | JP 2008514793 A | 08-05-2008 |
| | | KR 20070072903 A | 06-07-2007 |
| | | US 2006100297 A1 | 11-05-2006 |
| | | WO 2006039428 A1 | 13-04-2006 |
| WO 2010022208 A1 | 25-02-2010 | AU 2009282898 A1 | 25-02-2010 |
| | | BR PI0917193 A2 | 10-11-2015 |
| | | CA 2734132 A1 | 25-02-2010 |
| | | CN 102171281 A | 31-08-2011 |
| | | EP 2315796 A1 | 04-05-2011 |
| | | JP 2012500327 A | 05-01-2012 |
| | | KR 20110044313 A | 28-04-2011 |
| | | TW 201016774 A | 01-05-2010 |
| | | US 2010048752 A1 | 25-02-2010 |
| | | WO 2010022208 A1 | 25-02-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20190276650 A1


### Non-patent literature cited in the description


- **A.J. BRANDOLINI ; D.D. HILLS.** NMR spectra of polymers and polymer additives. Marcel Deker Inc, 2000
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **HEINO, E.L. ; LEHTINEN, A. ; TANNER J. ; SEPPÄLÄ, J.** Rheological characterization of polyethylene fractions. *Theor. Appl. Rheol., Proc. Int. Congr. Rheol, 11th,* 1992, vol. 1, 360-362
- **HEINO, E.L.** The influence of molecular structure on some rheological properties of polyethylene. *Annual Transactions of the Nordic Rheology Society,* 1995
- Definition of terms relating to the non-ultimate mechanical properties of polymers. *Pure & Appl. Chem.,* 1998, vol. 70 (3), 701-754
- **J. M. DEALY ; K. F. WISSBRUN.** Melt Rheology and Its Role in Plastics Processing: Theory and Applications. 1990
- **S. FILIPE.** Non-Linear Rheology of Polymer Melts. *AIP Conference Proceedings,* 2009, vol. 1152, 168-174
- **M. WILHELM.** *Macromol. Mat. Eng.,* 2002, vol. 287, 83-105
- **S. FILIPE ; K. HOFSTADLER ; K. KLIMKE ; A. T. TRAN.** Non-Linear Rheological Parameters for Characterisation of Molecular Structural Properties in Polyolefins. *Proceedings of Annual European Rheology Conference,* 2010, vol. 135
- **S. FILIPE ; K. KLIMKE ; A. T. TRAN ; J. REUSSNER.** Proceedings of Novel Non-Linear Rheological Parameters for Molecular Structural Characterisation of Polyolefins. *Novel Trends in Rheology IV, Zlin, Check Republik,* 2011
- **K. KLIMKE ; S. FILIPE ; A. T. TRAN.** Non-linear rheological parameters for characterization of molecular structural properties in polyolefins. *Proceedings of European Polymer Conference, Granada, Spain,* 2011
- Dynamic mechanical analysis: a practical introduction. **KEVIN P. MENARD.** Dynamic Testing and Instrumentation. Taylor & Francis Group, LLC, 2008, 71-76